# EUROPÄISCHE PATENTSCHRIFT

(11) **EP 1 217 394 B1**
(45) Veröffentlichungstag und Bekanntmachung des Hinweises auf die Patenterteilung: **23.07.2003**
(21) Anmeldenummer: 01127973.4
(22) Anmeldetag: 24.11.2001
(51) Int. Cl.: G02B 1/10, G02B 5/08, G02B 5/22

(54) **Verbundmaterial**
Composite material
Matériau composite

(30) Priorität: 20.12.2000 DE 20021660 U
(43) Veröffentlichungstag der Anmeldung: 26.06.2002
(73) Patentinhaber: ALANOD Aluminium-Veredlung GmbH & Co. KG, 58256 Ennepetal (DE)
(72) Erfinder: Reichert, Werner, 42287 Wuppertal (DE); Gänz, Klaus, 42389 Wuppertal (DE)
(74) Vertreter: Patentanwälte Dr. Solf & Zapf

(56) Entgegenhaltungen:
- EP-A- 0 918 234
- DE-A- 19 639 059
- US-A- 5 527 562
- US-A- 5 663 001
- US-A- 5 919 561

## Beschreibung

Die vorliegende Erfindung betrifft ein Verbundmaterial mit einem aus Aluminium bestehenden Träger, mit einer auf einer Seite auf dem Träger befindlichen Zwischenschicht und mit einem auf die Zwischenschicht aufgebrachten optisch wirksamen Mehrschichtsystem, welches aus drei Schichten besteht, wobei die beiden oberen Schichten dielektrische und/oder oxidische Schichten sind und die unterste Schicht eine auf die Zwischenschicht aufgetragene metallische Schicht ist. Siehe beispielsweise die Druckschrift EP 0 918 234.

Ein derartiges Verbundmaterial hat als oberflächenveredeltes Aluminiumband unter dem Namen MIRO® weite Verbreitung für die Beleuchtungstechnik, Tageslichtsysteme und dekorative Anwendungen gefunden. Die Oberflächenbehandlung dient dabei dazu, die empfindliche Aluminumoberfläche besser zu schützen und den Lichtreflexionsgrad zu erhöhen. Der Veredlungsvorgang besteht aus zwei unterschiedlichen Prozessen, die beide kontinuierlich betrieben werden können, und zwar aus der Erzeugung der Zwischenschicht in einem naßchemischen Prozeß, der zusammenfassend als Eloxieren bezeichnet wird und ein elektrolytisches Glänzen sowie eine anodische Oxydation umfaßt, und aus der Aufbringung des optisch wirksamen Mehrschichtsystems im Vakuum. Bei den beiden oberen Schichten handelt es sich dabei allgemein um dielektrische Schichten, wobei die Verwendung oxidischer Schichten, wie beispielsweise Aluminiumoxid oder Titanoxid als oberste Schicht und Siliciumdioxid als mittlere Schicht, einen bevorzugten Sonderfall darstellt. Zu Einzelheiten des bekannten MIRO®-Verfahrens wird beispielhaft auf "elektrowärme international" 53 (1995) B 4 - November, S. B 215-B 223 verwiesen.

Allgemein teilt sich bei einem Objekt, auf das eine Strahlung auftrifft, diese Strahlung in einen reflektierten, einen absorbierten und einen transmittierten Anteil auf, die durch den Reflexionsgrad (Reflexionsvermögen), den Absorptionsgrad (Absorptionsvermögen) und den Transmissionsgrad (Transmissionsvermögen) des Objektes bestimmt werden. Reflexionsvermögen, Absorptionsvermögen und Transmissionsvermögen sind optische Eigenschaften, die je nach der Wellenlänge einer einfallenden Strahlung (z.B. im Ultraviolett-Bereich, im Bereich des sichtbaren Lichts, im Infrarot-Bereich und im Bereich der Wärmestrahlung) für ein- und dasselbe Material unterschiedliche Werte annehmen können. Hinsichtlich des Absorptionsvermögens ist dabei das Kirchhoffsche Gesetz bekannt, wonach der Absorptionsgrad jeweils bei einer bestimmten Temperatur und Wellenlänge in konstantem Verhältnis zum Emissionsgrad steht. Somit sind für das Absorptionsvermögen auch das Wiensche Verschiebegesetz bzw. das Plancksche Gesetz sowie das Stefan-Boltzmann-Gesetz von Bedeutung, durch die bestimmte Zusammenhänge zwischen Strahlungsintensität, spektraler Verteilungdichte, Wellenlänge und Temperatur eines sogenannten "Schwarzen Körpers" beschrieben werden. Dabei ist bei Berechnungen zu beachten, daß der "Schwarze Körper" als solcher nicht existiert und reale Stoffe in je charakteristischer Weise von der Idealverteilung abweichen.

Bei dem bekannten Verbundmaterial spielt insbesondere das hohe Reflexionsvermögen im Bereich des sichtbaren Lichtes eine Rolle, das sich beispielsweise in einem nach DIN 5036, Teil 3 bestimmten Licht-Gesamtreflexionsgrad mit Spitzenwerten von bis zu 95 Prozent ausdrückt. Außerdem ist bei dem bekannten Material, das vorzugsweise als Halbzeug geliefert wird, seine ausgezeichnete Verarbeitbarkeit, vor allem seine Verformbarkeit, hervorzuheben.

Bei bestimmten Anwendungsfällen kann es auch vorkommen, daß in einem Wellenlängenbereich der einfallenden Strahlung ein möglichst hoher Reflexionsgrad und in anderen Bereichen ein möglichst geringer Reflexionsgrad, dafür aber um so höherer Absorptionsgrad gefordert ist. Dies ist z.B. im Bereich der Solarkollektoren so, wo im solaren Wellenlängenbereich (etwa 300 bis etwa 2500 nm) ein maximaler Absorptionsgrad und im Bereich der Wärmestrahlung (oberhalb etwa 2500 nm) ein maximaler Reflexionsgrad gefordert wird. So sind unter dem Namen Tinox Absorber für Flachkollektoren bekannt, in denen ein Verbundmaterial, das diese Forderungen erfüllt, zum Einsatz kommt. Dieses Material besteht aus einem Träger aus einem Kupferband, einer darauf aufgebrachten Schicht aus Titanoxynitrid und einer Deckschicht aus Siliciumdioxid.

Der vorliegenden Erfindung liegt die Aufgabe zugrunde, ein Verbundmaterial der eingangs beschriebenen Art zu schaffen, mit dem in verschiedenen Wellenlängenbereichen Absorptionsgrad und Reflexionsgrad gezielt selektiv einstellbar sind. Darüber hinaus soll sich das Verbundmaterial auch durch eine gute Verarbeitbarkeit, insbesondere Verformbarkeit, eine hohe Wärmeleitfähigkeit, sowie hohe thermische und chemische Langzeitbeständigkeit auszeichnen.

Erfindungsgemäß wird dies dadurch erreicht, daß die oberste Schicht des optischen Mehrschichtsystems eine dielektrische Schicht, vorzugsweise eine oxidische, fluoridische oder nitridische Schicht der chemischen Zusammensetzung MeO_{z}, MeFᵣ, MeNₛ, mit einem Brechungsindex n < 1,8 und die mittlere Schicht des optischen Mehrschichtsystems eine lichtabsorbierende chromoxidische Schicht der chemischen Zusammensetzung CrOₓ ist und die unterste Schicht des optischen Mehrschichtsystems aus Gold, Silber, Kupfer, Chrom, Aluminium und/oder Molybdän besteht, wobei die Indizes x, z, r und s ein stöchiometrisches oder nichtstöchiometrisches Verhältnis in den Oxiden, Fluoriden oder Nitriden bezeichnen.

Das erfindungsgemäße optische Mehrschichtsystem ist zunächst in vorteilhafter Weise aufbringbar, indem auf umweltgefährende, zum Teil giftige, Salzlösungen bei der Herstellung verzichtet werden kann. So kann die metallische Schicht des optischen Mehrschichtsystems eine Sputterschicht oder eine durch Verdampfen, insbesondere durch Elektronenbombardement oder aus thermischen Quellen, erzeugte Schicht sein. Die beiden oberen Schichten des optischen Mehrschichtsystems können ebenfalls Sputterschichten, insbesondere durch Reaktivsputtem erzeugte Schichten, CVD- oder PECVD-Schichten oder durch Verdampfen, insbesondere durch Elektronenbombardement oder aus thermischen Quellen, erzeugte Schichten sein, so daß das gesamte optische Mehrschichtsystem aus in Vakuumfolge, insbesondere in einem kontinuierlichen Verfahren, aufgetragenen Schichten besteht.

Bei der obersten Schicht kann es sich bevorzugt um eine siliciumoxidische Schicht der chemischen Zusammensetzung SiO_{y} handeln, wobei der Index y wiederum ein stöchiometrisches oder nichtstöchiometrisches Verhältnis in der oxidischen Zusammensetzung bezeichnet.

Die genannten Verfahren gestatten es vorteilhafterweise auch, die chemische Zusammensetzung der obersten Schicht und die chemische Zusammensetzung CrOₓ der chromoxidischen Schicht hinsichtlich der Indizes x, y, z, r und s nicht nur auf bestimmte, diskrete Werte einzustellen, sondern zwischen dem oxydierten Stoff und dem Sauerstoff ein stöchiometrisches oder nichtstöchiometrisches Verhältnis innerhalb bestimmter Grenzen fließend zu variieren. Dadurch können beispielsweise der Brechungsindex der reflexionsmindemden obersten Schicht, die auch ein Ansteigen der Werte für die mechanische Belastbarkeit (DIN 58196, Teil 5) bewirkt, und der Absorptionsgrad der chromoxidischen Schicht gezielt eingestellt werden, wobei mit zunehmendem Wert des Index x die Absorptionsfähigkeit abnimmt.

Erfindungsgemäß kann ein nach DIN 5036, Teil 3 bestimmter Licht-Gesamtreflexionsgrad auf der Seite des optischen Mehrschichtsystems auf einen bevorzugten Wert von weniger als 5 % eingestellt werden, wobei neben einer hohen Alterungsbeständigkeit auch eine hohe thermische Stabilität gewährleistet werden kann - derart, daß auf der Seite des optischen Mehrschichtsystems bei einer Temperaturbelastung von 430 °C / 100 Stunden nur Änderungen von weniger als 7 %, vorzugsweise von weniger als 4 % des vorhandenen Reflexionsgrades auftreten. Außerdem tritt bei einer solchen Temperaturbelastung vorteilhafterweise auch kein Ausgasen auf.

Das erfindungsgemäße Verbundmaterial weist durch seine synergistisch wirkende Eigenschaftskombination
- der Trägerschicht, z.B. deren ausgezeichneter Verformbarkeit, mit der sie Beanspruchungen der Weiterverarbeiter bei den vorzunehmenden Formgebungsprozessen ohne Probleme widersteht, z.B. deren hoher Wärmeleitfähigkeit sowie der Fähigkeit zu einer im solaren Wellenlängenbereich zusätzlich absorptionsfördernden Oberflächengestaltung, der die anderen Schichten dann im Relief folgen, und außerdem mit einem Reflexionsvermögen im Bereich der Wärmestrahlung, das die Wirkung der metallischen Schicht des optischen Dreischichtsystems verstärkt;
- der Zwischenschicht, die einerseits einen mechanischen und korrosionshemmenden Schutz für den Träger und andererseits eine hohe Haftung für das optische Mehrschichtsystem gewährleistet;
- der metallischen Schicht, die durch ihre Konstituenten, die im Bereich der Wärmestrahlung ein hohes Reflexionsvermögen und damit eine geringe Emission aufweisen, der Tatsache Rechnung trägt, daß nach dem Gesetz von Lambert-Bouguer die Strahlungsleistung mit wachsender Eindringtiefe mit exponentieller Charakteristik absorbiert wird, und für die meisten anorganischen Stoffe schon in einer sehr geringen Tiefe (weniger als etwa 1 µm) als speicherbare Wärmeenergie zur Verfügung steht;
- der chromoxidischen Schicht mit ihrer hohen Selektivität des Absorptionsgrades (Spitzenwerte über 90 % im solaren Bereich, Minimalwerte unter 15 % im Wellenlängenbereich > ca. 2500 nm) und ihrer bereits erläuterten Modifikationsfähigkeit (Index x) und
- der obersten, insbesondere siliciumoxidischen, Schicht, auf deren Vorteile schon vorstehend teilweise verwiesen wurde, und die neben ihrer entspiegelnden Wirkung auch ein hohes Transmissionsvermögen aufweist und dadurch den Anteil der chromoxidischen Schicht absorbierbaren Strahlungswerte im solaren Bereich erhöht;
eine ausgezeichnete Verwendbarkeit für Absorber von Sonnenkollektoren sowie auch für andere Anwendungsfälle, wie beispielsweise als Lichtabsorber beim Bau von Kraftfahrzeugscheinwerfern oder anderen Beleuchtungseinrichtungen, auf. So können unter Einsatz des erfindungsgemäßen Verbundmaterials nicht nur Niedrigtemperatur-Kollektoren mit einer Betriebstemperatur bis zu 100 °C, sondern auch Hochtemperatur-Kollektoren hergestellt werden. Dabei sind Stillstandstemperaturen oberhalb 250 °C möglich, wobei darunter jeweils die maximale, theoretisch mögliche Einsatztemperatur zu verstehen ist, bei der das Material im thermischen Gleichgewicht mit der Umgebung steht.

Weitere vorteilhafte Ausführungen der Erfindung sind in den Unteransprüchen und in der nachfolgenden detaillierten Beschreibung enthalten.

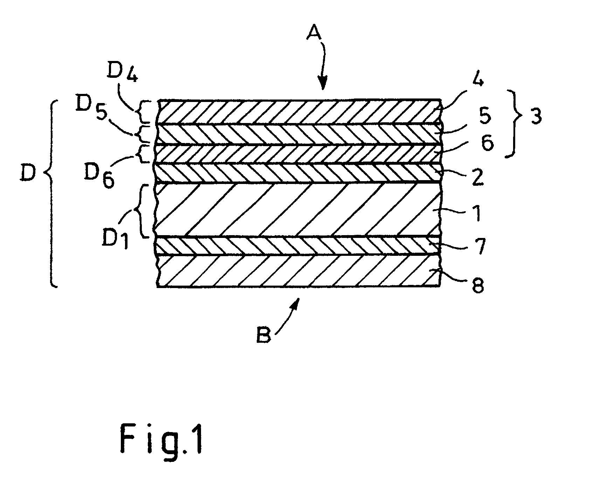

Anhand eines durch die beiliegende Zeichnung veranschaulichten Ausführungsbeispiels wird die Erfindung näher erläutert. Fig. 1 zeigt dabei eine prinzipielle Schnittdarstellung durch ein erfindungsgemäßes Verbundmaterial.

Die beschriebene Ausführung betrifft ein erfindungsgemäßes Verbundmaterial mit einer hohen Selektivität des Absorptions- und Reflexionsgrades im solaren Wellenlängenbereich und im Bereich der Wärmestrahlung.

Das Verbundmaterial besteht aus einem, insbesondere verformungsfähigen, bandförmigen Träger 1 aus Aluminium, einer auf einer Seite A auf den Träger 1 aufgetragenen Zwischenschicht 2 und einem auf die Zwischenschicht 2 aufgebrachten optisch wirksamen Mehrschichtsystem 3.

Ein nach DIN 5036, Teil 3 bestimmter Licht-Gesamtreflexionsgrad beträgt auf der Seite A des optischen Mehrschichtsystems 3 weniger als 5 %.

Das Verbundmaterial kann bevorzugt als Coil mit einer Breite bis zu 1600 mm, vorzugsweise von 1250 mm, und mit einer Dicke D von etwa 0,1 bis 1,5 mm, vorzugsweise von etwa 0,2 bis 0,8 mm, ausgebildet sein. Der Träger 1 kann dabei vorzugsweise eine Dicke D₁ von etwa 0,1 bis 0,7 mm besitzen.

Das Aluminium des Trägers 1 kann insbesondere eine höhere Reinheit als 99,0 % aufweisen, wodurch seine Wärmeleitfähigkeit gefördert wird.

Die Zwischenschicht 2 besteht aus anodisch oxidiertem oder elektrolytisch geglänztem und anodisch oxidiertem Aluminium, das aus dem Trägermaterial gebildet ist.

Das Mehrschichtsystem 3 besteht wiederum aus drei Einzelschichten 4, 5, 6, wobei die beiden oberen Schichten 4, 5 oxidische Schichten sind und die unterste Schicht 6 eine auf die Zwischenschicht 2 aufgetragene metallische Schicht ist. Die oberste Schicht 4 des optischen Mehrschichtsystems 3 eine siliciumoxidische Schicht der chemischen Zusammensetzung SiO_{y}. Die mittlere Schicht 5 ist eine chromoxidische Schicht der chemischen Zusammensetzung CrOₓ, und die unterste Schicht 6 besteht aus Gold, Silber, Kupfer, Chrom, Aluminium und/oder Molybdän.

Die Indizes x, y bezeichnen dabei ein stöchiometrisches oder nichtstöchiometrisches Verhältnis des oxidierten Stoffes zum Sauerstoff in den Oxiden. Das stöchiometrische oder nichtstöchiometrische Verhältnis x kann vorzugsweise im Bereich 0 < x < 3 liegen, während das stöchiometrische oder nichtstöchiometrische Verhältnis y Werte im Bereich 1 ≤ y ≤ 2 annehmen kann.

Dadurch, daß die beiden oberen Schichten 4, 5 des optischen Mehrschichtsystems 3 Sputterschichten sein können, insbesondere durch Reaktivsputtern erzeugte Schichten, CVD- oder PECVD-Schichten oder durch Verdampfen, insbesondere durch Elektronenbombardement oder aus thermischen Quellen, erzeugte Schichten, ist es möglich, die Verhältnisse x, y ungestuft (also auch auf nichtstöchiometrische Werte der Indizes) einzustellen, wodurch die jeweiligen Schichteigenschaften variiert werden können.

Die oberste Schicht 4 des optischen Mehrschichtsystems 3 kann dabei mit Vorteil eine Dicke D₄ von mehr als 3 nm aufweisen. Bei dieser Dicke D₄ besitzt die Schicht bereits eine ausreichende Effizienz, wobei Zeit-, Material- und Energieaufwand jedoch nur geringe Werte annehmen. Ein oberer Grenzwert der Schichtdicke D₄ liegt unter diesem Gesichtspunkt bei etwa 500 nm. Ein für die mittlere Schicht 5 des optischen Mehrschichtsystems 3 unter den genannten Gesichtspunkten optimaler Wert ist eine minimale Dicke D₅ von mehr als 10 nm, maximal etwa 1 µm. Der entsprechende Wert für die unterste Schicht 6 liegt bei einer Dicke D₆ von mindestens 3 nm, maximal etwa 500 nm.

Die unterste Schicht 6 des optischen Mehrschichtsystems 3 sollte im Sinne einer hohen Effizienz bevorzugt eine höhere Reinheit als 99,5 % aufweisen. Die Schicht kann, wie bereits erwähnt, eine Sputterschicht oder eine durch Verdampfen, insbesondere durch Elektronenbombardement oder aus thermischen Quellen, erzeugte Schicht sein, so daß das gesamte optische Mehrschichtsystem 3 vorteilhafterweise aus in Vakuumfolge in einem kontinuierlichen Verfahren aufgetragenen Schichten 4, 5, 6 besteht.

Auf der dem optischen Mehrschichtsystem 3 abgewandten Seite B des bandförmigen Trägers 1 ist eine Unterschicht 7 aufgebracht, die - wie die Zwischenschicht 2 - aus anodisch oxidiertem oder elektrolytisch geglänztem und anodisch oxidiertem Aluminium besteht. Die Zwischenschicht 2 und die Unterschicht 7 können vorteilhafterweise gleichzeitig auf dem naßchemischen Weg erzeugt werden, wobei die Poren der Aluminiumoxidschicht in der letzten Phase der naßchemischen Prozeßkette weitestgehend durch eine Heißverdichtung verschlossen werden können, so daß eine dauerhaft beständige Oberfläche entsteht. Die Unterschicht 7 bietet somit - wie die Zwischenschicht 2 - einen mechanischen und korrosionshemmenden Schutz für den Träger 1.

Ein nach DIN 5036, Teil 3 bestimmter Licht-Gesamtreflexionsgrad auf der dem optischen Mehrschichtsystem 3 abgewandten Seite B kann dabei bevorzugt mindestens 84 % betragen.

Erfindungsgemäß ist es insbesondere möglich, den Schichtaufbau derart zu gestalten, daß der nach DIN 5036, Teil 3 bestimmte Licht-Gesamtreflexionsgrad auf der Seite A des optischen Mehrschichtsystems 3 und/oder auf der dem optischen Mehrschichtsystem 3 abgewandten Seite B bei einer Temperaturbelastung von 430 °C / 100 Stunden Änderungen von weniger als 7 %, vorzugsweise von weniger als 4 %, aufweist.

Die vorliegende Erfindung ist nicht auf das dargestellte Ausführungsbeispiel beschränkt, sondern umfaßt alle im Sinne der Erfindung gleichwirkenden Mittel und Maßnahmen. So ist es beispielsweise auch möglich, daß die unterste Schicht 6 des optischen Mehrschichtsystems 3 aus mehreren übereinander angeordneten Teilschichten aus Gold, Silber, Kupfer, Chrom, Aluminium und/oder Molybdän besteht. Wie bereits erwähnt, kann die oberste Schicht alternativ auch aus Fluoriden oder Nitriden bestehen.

Des weiteren kann der Fachmann die Erfindung durch zusätzliche vorteilhafte Maßnahmen ergänzen, ohne daß der Rahmen der Erfindung verlassen wird. So kann - wie ebenfalls zeichnerisch dargestellt - auf der dem optischen Mehrschichtsystem 3 abgewandten Seite B, insbesondere auf der Unterschicht 7 zusätzlich eine Dekorativschicht 8 aufgebracht sein. Diese Dekorativschicht 8 kann beispielsweise eine metallische oder aus Titannitrid oder anderen geeigneten Materialien, mit denen auch neben einem Glanz eine bestimmte Färbung verliehen werden kann, bestehende Spiegelschicht sein.

### Bezugszeichen

- 1: Träger
- 2: Zwischenschicht
- 3: optisches Mehrschichtsystem
- 4: obere Schicht von 3
- 5: mittlere Schicht von 3
- 6: untere Schicht von 3
- 7: Unterschicht
- 8: Dekorativschicht

- A: Oberseite (Seite von 3)
- B: Unterseite (3 abgewandt)

- D: (Gesamt-)Dicke
- D₁: Dicke von 1
- D₄: Dicke von 4
- D₅: Dicke von 5
- D₆: Dicke von 6

## Patentansprüche

1. Verbundmaterial mit einem aus Aluminium bestehenden Träger (1), mit einer auf einer Seite (A) auf dem Träger (1) befindlichen Zwischenschicht (2) und mit einem auf die Zwischenschicht (2) aufgebrachten optisch wirksamen Mehrschichtsystem (3), welches aus drei Schichten (4, 5, 6) besteht, wobei die beiden oberen Schichten (4, 5) dielektrische und/oder oxidische Schichten sind und die unterste Schicht (6) eine auf die Zwischenschicht (2) aufgetragene metallische Schicht ist,
**dadurch gekennzeichnet, daß** die oberste Schicht (4) des optischen Mehrschichtsystems (3) eine dielektrische Schicht, vorzugsweise eine oxidische, fluoridische oder nitridische Schicht der chemischen Zusammensetzung MeO_{z}, MeFᵣ, MeNₛ, mit einem Brechungsindex n< 1,8 und die mittlere Schicht (5) des optischen Mehrschichtsystems (3) eine lichtabsorbierende chromoxidische Schicht der chemischen Zusammensetzung CrOₓ ist und die unterste Schicht (6) des optischen Mehrschichtsystems (3) aus Gold, Silber, Kupfer, Chrom, Aluminium und/oder Molybdän besteht, wobei die Indizes x, z, r und s ein stöchiometrisches oder nichtstöchiometrisches Verhältnis in den Oxiden, Fluoriden oder Nitriden bezeichnen.

2. Verbundmaterial nach Anspruch 1,
**dadurch gekennzeichnet, daß** die oberste Schicht (4) des optischen Mehrschichtsystems (3) eine siliciumoxidische Schicht der chemischen Zusammensetzung SiO_{y} ist, wobei der Index y ein stöchiometrisches oder nichtstöchiometrisches Verhältnis bezeichnet.

3. Verbundmaterial nach Anspruch 1 oder 2,
**dadurch gekennzeichnet, daß** die Zwischenschicht (2) aus anodisch oxidiertem oder elektrolytisch geglänztem und anodisch oxidiertem Aluminium besteht.

4. Verbundmaterial nach einem der Ansprüche 1 bis 3,
**gekennzeichnet durch**, eine auf der dem optischen Mehrschichtsystem (3) abgewandten Seite (B) auf den Träger (1) aufgebrachte Unterschicht (7), die aus anodisch oxidiertem oder elektrolytisch geglänztem und anodisch oxidiertem Aluminium besteht.

5. Verbundmaterial nach einem der Ansprüche 1 bis 4,
**dadurch gekennzeichnet, daß** das stöchiometrische oder nichtstöchiometrische Verhältnis x im Bereich 0 < x < 3 liegt.

6. Verbundmaterial nach einem der Ansprüche 2 bis 5,
**dadurch gekennzeichnet, daß** das stöchiometrische oder nichtstöchiometrische Verhältnis y im Bereich 1 ≤ y ≤ 2 liegt.

7. Verbundmaterial nach einem der Ansprüche 1 bis 6,
**dadurch gekennzeichnet, daß** die unterste Schicht (6) des optischen Mehrschichtsystems (3) aus mehreren übereinander angeordneten Teilschichten aus Gold, Silber, Kupfer, Chrom, Aluminium und/oder Molybdän besteht.

8. Verbundmaterial nach einem der Ansprüche 1 bis 7,
**dadurch gekennzeichnet, daß** die beiden oberen Schichten (4, 5) des optischen Mehrschichtsystems (3) Sputterschichten, insbesondere durch Reaktivsputtem erzeugte Schichten, CVD- oder PECVD-Schichten oder durch Verdampfen, insbesondere durch Elektronenbombardement oder aus thermischen Quellen, erzeugte Schichten sind.

9. Verbundmaterial nach einem der Ansprüche 1 bis 8,
**dadurch gekennzeichnet, daß** die metallische Schicht des optischen Mehrschichtsystems (3) eine Sputterschicht oder eine durch Verdampfen, insbesondere durch Elektronenbombardement oder aus thermischen Quellen, erzeugte Schicht ist.

10. Verbundmaterial nach einem der Ansprüche 1 bis 9,
**dadurch gekennzeichnet, daß** das optische Mehrschichtsystem (3) aus in Vakuumfolge in einem kontinuierlichen Verfahren aufgetragenen Schichten besteht.

11. Verbundmaterial nach einem der Ansprüche 1 bis 10,
**dadurch gekennzeichnet, daß** die oberste Schicht (4) des optischen Mehrschichtsystems (3) eine Dicke (D₄) von mehr als 3 nm und maximal etwa 500 nm aufweist.

12. Verbundmaterial nach einem der Ansprüche 1 bis 11,
**dadurch gekennzeichnet, daß** die mittlere Schicht (5) des optischen Mehrschichtsystems (3) eine Dicke (D₅) von mehr als 10 nm und maximal etwa 1µm aufweist.

13. Verbundmaterial nach einem der Ansprüche 1 bis 12,
**dadurch gekennzeichnet, daß** die unterste Schicht (6) des optischen Mehrschichtsystems (3) eine Dicke (D₆) von mindestens 3 nm und maximal etwa 500 nm aufweist.

14. Verbundmaterial nach einem der Ansprüche 1 bis 13,
**dadurch gekennzeichnet, daß** ein nach DIN 5036, Teil 3 bestimmter Licht-Gesamtreflexionsgrad auf der Seite (A) des optischen Mehrschichtsystems (3) weniger als 5 % beträgt.

15. Verbundmaterial nach einem der Ansprüche 1 bis 14,
**dadurch gekennzeichnet, daß** ein nach DIN 5036, Teil 3 bestimmter Licht-Gesamtreflexionsgrad auf der dem optischen Mehrschichtsystem (3) abgewandten Seite (B) mindestens 84 % beträgt.

16. Verbundmaterial nach einem der Ansprüche 1 bis 15,
**dadurch gekennzeichnet, daß** ein nach DIN 5036, Teil 3 bestimmter Licht-Gesamtreflexionsgrad auf der Seite (A) des optischen Mehrschichtsystems (3) und/oder auf der dem optischen Mehrschichtsystem (3) abgewandten Seite (B) bei einer Temperaturbelastung von 430 °C / 100 Stunden Änderungen von weniger als 7 %, vorzugsweise von weniger als 4 %, aufweist.

17. Verbundmaterial nach einem der Ansprüche 1 bis 16,
**dadurch gekennzeichnet, daß** das Aluminium des Trägers (1) eine höhere Reinheit als 99,0 % aufweist.

18. Verbundmaterial nach einem der Ansprüche 1 bis 6,
**dadurch gekennzeichnet, daß** die unterste Schicht (6) des optischen Mehrschichtsystems (3) eine höhere Reinheit als 99,5 % aufweist.

19. Verbundmaterial nach einem der Ansprüche 1 bis 18,
**gekennzeichnet durch** eine Ausbildung als Coil mit einer Breite bis zu 1600 mm, vorzugsweise von 1250 mm, und mit einer Dicke (D) von etwa 0,1 bis 1,5 mm, vorzugsweise von etwa 0,2 bis 0,8 mm.

20. Verbundmaterial nach einem der Ansprüche 1 bis 19,
**gekennzeichnet durch** eine auf der dem optischen Mehrschichtsystem (3) abgewandten Seite (B), insbesondere auf der Unterschicht (7) aufgebrachte Dekorativschicht (8), beispielsweise eine Spiegelschicht.

## Claims

1. Composite material having a substrate (1), which consists of aluminium, having an intermediate layer (2), which is located on the substrate (1) on one side (A), and having an optically active multilayer system (3), which is applied to the intermediate layer (2) and comprises three layers (4, 5, 6), the two upper layers (4, 5) being dielectric and/or oxide layers and the bottom layer (6) being a metallic layer which has been applied to the intermediate layer (2), **characterized in that** the top layer (4) of the optical multilayer system (3) is a dielectric layer, preferably an oxide, fluoride or nitride layer of chemical composition MeO_{z}, MeFᵣ, MeNₛ, with a refractive index n < 1.8, and the middle layer (5) of the optical multilayer system (3) is a light-absorbing chromium oxide layer of chemical composition CrOₓ, and the bottom layer (6) of the optical multilayer system (3) consists of gold, silver, copper, chromium, aluminium and/or molybdenum, the indices x, z, r and s indicating a stoichiometric or non-stoichiometric ratio in the oxides, fluorides or nitrides.

2. Composite material according to Claim 1, **characterized in that** the top layer (4) or the optical multilayer system (3) is a silicon oxide layer of chemical composition SiO_{y}, the index y indicating a stoichiometric or non-stoichiometric ratio.

3. Composite material according to Claim 1 or 2, **characterized in that** the intermediate layer (2) consists of anodically oxidized or electrolytically brightened and anodically oxidized aluminium.

4. Composite material according to one of Claims 1 to 3, **characterized by** a lower layer (7) which is applied to the substrate (1) on the side (B) which is remote from the optical multilayer system (3) and which consists of anodically oxidized or electrolytically brightened and anodically oxidized aluminium.

5. Composite material according to one of Claims 1 to 4, **characterized in that** the stoichiometric or non-stoichiometric ratio x lies in the range 0 < x < 3.

6. Composite material according to one of Claims 2 to 5, **characterized in that** the stoichiometric or non-stoichiometric ratio y lies in the range 1 ≤ y ≤ 2.

7. Composite material according to one of Claims 1 to 6, **characterized in that** the bottom layer (6) of the optical multilayer system (3) comprises a plurality of partial layers of gold, silver, copper, chromium, aluminium and/or molybdenum arranged above one another.

8. Composite material according to one of Claims 1 to 7, **characterized in that** the two upper layers (4, 5) of the optical multilayer system (3) are sputtered layers, in particular layers produced by reactive sputtering, CVD or PECVD layers or layers produced by vaporization, in particular by electron bombardment or from thermal sources.

9. Composite material according to one of Claims 1 to 8, **characterized in that** the metallic layer of the optical multilayer system (3) is a sputtered layer or a layer produced by vaporisation, in particular by electron bombardment or from thermal sources.

10. Composite material according to one of Claims 1 to 9, **characterized in that** the optical multilayer system (3) comprises layers which are applied in vacuum order in a continuous process.

11. Composite material according to one of Claims 1 to 10, **characterized in that** the top layer (4) of the optical multilayer system (3) has a thickness (D₄) of more than 3 nm and at most approximately 500 nm.

12. Composite material according to one of Claims 1 to 11, **characterized in that** the middle layer (5) of the optical multilayer system (3) has a thickness (D₅) of more than 10 nm and at most approximately 1 µm.

13. Composite material according to one of Claims 1 to 12, **characterized in that** the bottom layer (6) of the optical multilayer system (3) has a thickness (D₆) of at least 3 nm and at most approximately 500 nm.

14. Composite material according to one of Claims 1 to 13, **characterized in that** a total light reflectivity, determined in accordance with DIN 5036, Part 3, on the side (A) of the optical multilayer system (3) is less than 5%.

15. Composite material according to one of Claims 1 to 14, **characterized in that** a total light reflectivity, determined in accordance with DIN 5036, Part 3, on the side (B) which is remote from the optical multilayer system (3) is at least 84%.

16. Composite material according to one of Claims 1 to 15, **characterized in that** a total light reflectivity, determined in accordance with DIN 5036, Part 3, on the side (A) of the optical multilayer system (3) and/or on the side (B) which is remote from the optical multilayer system (3), under a thermal load of 430°C/100 hours, undergoes changes of less than 7%, preferably of less than 4%.

17. Composite material according to one of Claims 1 to 16, **characterized in that** the aluminium of the substrate (1) is more than 99.0% pure.

18. Composite material according to one of Claims 1 to 6, **characterized in that** the bottom layer (6) of the optical multilayer system (3) is more than 99.5% pure.

19. Composite material according to one of Claims 1 to 18, **characterized by** a design as a coil with a width of up to 1600 mm, preferably of 1250 mm, and with a thickness (D) of approximately 0.1 to 1.5 mm, preferably of approximately 0.2 to 0.8 mm.

20. Composite material according to one of Claims 1 to 19, **characterized by** a decorative layer (8), for example a mirror coating, which is applied to the side (B) which is remote from the optical multilayer system (3), in particular to the lower layer (7).

## Revendications

1. Matériau composite comprenant un support (1) composé d'aluminium, une couche intermédiaire (2) qui se trouve sur une face (A) sur le support (1) et un système multicouche à action optique (3), déposé sur la couche intermédiaire (2) et qui est composé de trois couches (4, 5, 6), les deux couches supérieures (4, 5) étant des couches diélectriques et/ou des couches d'oxyde, et la couche extrême inférieure (6) étant une couche métallique déposée sur la couche intermédiaire (2)
**caractérisé en ce que** la couche extrême supérieure (4) du système optique multicouche (3) est une couche diélectrique, de préférence une couche d'oxyde, de fluorure ou de nitrure ayant pour composition chimique MeO_{z}, MeFᵣ, MeNₛ, ayant un indice de réfraction n< 1,8, la couche centrale (5) du système optique multicouche (3) est une couche d'oxyde de chrome absorbant la lumière, ayant pour composition chimique CrOₓ et la couche extrême inférieure (6) du système optique multicouche (3) est composée d'or, d'argent, de cuivre, de chrome, d'aluminium et/ou de molybdène, les indices x, z, r et s désignant un rapport stoechiométrique ou non stoechiométrique dans les oxydes, fluorures ou nitrures.

2. Matériau composite selon la revendication 1,
**caractérisé en ce que** la couche extrême supérieure (4) du système optique multicouche (3) est une couche d'oxyde de silicium ayant pour composition chimique SiO_{y}, l'indice y désignant un rapport stoechiométrique ou non stoechiométrique.

3. Matériau composite selon la revendication 1 ou 2,
**caractérisé en ce que** la couche intermédiaire (2) est composée d'aluminium oxydé par anodisation ou brillanté électrolytiquement et oxydé par anodisation.

4. Matériau composite selon une des revendications 1 à 3,
**caractérisé par** une couche inférieure (7) déposée sur le support (1) sur la face (B) qui est à l'opposé du système optique multicouche (3) et qui est composée d'aluminium oxydé par anodisation ou brillanté électrolytiquement et oxydé par anodisation.

5. Matériau composite selon une des revendications 1 à 4,
**caractérisé en ce que** le rapport stoechiométrique ou non stoechiométrique x est dans l'intervalle de 0 <x<3.

6. Matériau composite selon une des revendications 2 à 5,
**caractérisé en ce que** le rapport stoechiométrique ou non stoechiométrique y se trouve dans l'intervalle de 1 ≤ y ≤ 2.

7. Matériau composite selon une des revendications 1 à 6,
**caractérisé en ce que** la couche extrême inférieure (6) du système optique multicouche (3) est composée de plusieurs couches partielles disposées les unes au-dessus des autres et faites d'or, d'argent, de cuivre, de chrome, d'aluminium et/ou de molybdène.

8. Matériau composite selon une des revendications 1 à 7,
**caractérisé en ce que** les deux couches supérieures (4, 5) du système optique multicouche (3) sont des couches de pulvérisation cathodique, en particulier des couches produites par pulvérisation réactive, des couches CVD ou PECVD ou des couches produites par évaporation, en particulier par bombardement électronique ou à partir de sources thermiques.

9. Matériau composite selon une des revendications 1 à 8,
**caractérisé en ce que** la couche métallique du système optique multicouche (3) est une couche de pulvérisation cathodique ou une couche produite par évaporation, en particulier par bombardement électronique ou à partir de sources thermiques.

10. Matériau composite selon une des revendications 1 à 9,
**caractérisé en ce que** le système optique multicouche (3) est composé de couches déposées dans une suite de vides dans un procédé continu.

11. Matériau composite selon une des revendications 1 à 10,
**caractérisé en ce que** la couche extrême supérieure (4) du système optique multicouche (3) présente une épaisseur (D₄) de plus de 3 nm et au maximum d'environ 500 nm.

12. Matériau composite selon une des revendications 1 à 11,
**caractérisé en ce que** la couche centrale (5) du système optique multicouche (3) présente une épaisseur (D₅) de plus de 10 nm et au maximum d'environ 1µm.

13. Matériau composite selon une des revendications 1 à 12,
**caractérisé en ce que** la couche extrême inférieure (6) du système optique multicouche (3) présente une épaisseur (D₆) d'au moins 3 nm et au maximum d'environ 500 nm.

14. Matériau composite selon une des revendications 1 à 13,
**caractérisé en ce qu'**un degré total de réflexion de la lumière, déterminé selon DIN 5036, partie 3, est inférieur à 5 % sur la face (A) du système optique multicouche (3).

15. Matériau composite selon une des revendications 1 à 14,
**caractérisé en ce qu'**un degré total de réflexion de la lumière, déterminé selon DIN 5036, partie 3, est d'au moins 84 % sur la face (B) qui est à l'opposé du système optique multicouche (3).

16. Matériau composite selon une des revendications 1 à 15,
**caractérisé en ce qu'**un degré total de réflexion de la lumière, déterminé selon DIN 5036, partie 3, sur la face (A) du système optique multicouche (3) et/ou sur la face (B) qui est à l'opposé du système optique multicouche (3) présente des altérations de moins de 7 %, de préférence de moins de 4 %, sous une contrainte de température de 430 °C/100 heures.

17. Matériau composite selon une des revendications 1 à 16,
**caractérisé en ce que** l'aluminium du support (1) possède une pureté supérieure à 99,0 %.

18. Matériau composite selon une des revendications 1 à 6,
**caractérisé en ce que** la couche extrême inférieure (6) du système optique multicouche (3) possède une pureté supérieure à 99,5 %.

19. Matériau composite selon une des revendications 1 à 18,
**caractérisé par** sa réalisation en forme d'enroulement d'une largeur allant jusqu'à 1600 mm, de préférence égale à 1250 mm et d'une épaisseur (D) d'environ 0,1 à 1,5 mm, de préférence d'environ 0,2 à 0,8 mm.

20. Matériau composite selon une des revendications 1 à 19,
**caractérisé par** une face (B) qui est à l'opposé du système optique multicouche (3), en particulier une couche décorative (8), par exemple une couche réfléchissante, déposée sur la couche inférieure (7).
